# EUROPÄISCHE PATENTANMELDUNG

(11) **EP 4 696 482 A1**
(43) Veröffentlichungstag der Anmeldung: **18.02.2026**
(21) Anmeldenummer: 25196064.7
(22) Anmeldetag: 14.08.2025
(51) Int. Cl.: B29C 48/16, B29B 17/02, B29B 17/04, B29C 48/12, B29C 48/275, B29C 48/92, B29K 21/00, C09K 3/10

(54) **VERFAHREN ZUR RECYCLIERUNG VON DICHTUNGSPROFILEN UND EINE FENSTER-, TÜR- UND FASSADENKONSTRUKTION**

(30) Priorität: 16.08.2024 DE 102024123463
(71) Anmelder: SCHÜCO International KG, 33609 Bielefeld (DE)
(72) Erfinder: WIERSPECKER, Dieter, 49324 Melle (DE); LINDENMANN, Benjamin, 33602 Bielefeld (DE)
(74) Vertreter: Dantz, Jan Henning

(57) **Zusammenfassung**

Ein Verfahren zur Recyclierung von EPDM-Dichtprofilen von Fenstern, Türen und/oder Fassadenkonstruktionen, mit den folgenden Schritten:
a. Bereitstellen (101) von gebrauchten EPDM-Dichtprofilen
b. Zerkleinern (102), insbesondere Zermahlen, der Dichtprofile
c. Benetzen (103) des zerkleinerten Materials mit einem Benetzungsmittel unter Bereitstellen einer Rezyklatvormischung (1) und Zuführung (105) von Neumaterial (2) zu dem zerkleinerten Material und
d. Formgebung (106) des zerkleinerten Materials, insbesondere zu einem Element (3) einer Fenster-, Tür- und/oder Fassadenkonstruktion, wobei die Formgebung (106) im Rahmen einer Coextrusion erfolgt; sowie eine Fenster-, Tür- oder Fassadenkonstruktion.

## Beschreibung

Die vorliegende Erfindung betrifft ein Verfahren zur Recyclierung von Dichtungsprofilen. Ein Verfahren zur Recyclierung von EPDM-Dichtprofilen von Fenstern, Türen und/oder Fassadenkonstruktionen und eine Fenster-, Tür- und/oder Fassadenkonstruktion.

Fenster-, Türen- oder Fassadenprofilkonstruktionen werden nach dem Ende ihres Lebenszyklus zumeist getrennt wiederaufgearbeitet. Während allerdings die Materialien von Hohlprofilen, wie Aluminium oder Kunststoff zumeist vollständig oder weitestgehend sortenrein aufarbeitbar sind, weisen Gummidichtungen in diesem Bereich eine große Streubreite an unterschiedlichen Härten, Vernetzungsarten, Rezepturdetails und Aufschäumungen auf.

Darüber hinaus sind Elastomere und/oder EPDM z.B. aufgrund der chemischen Vernetzung der Polymerketten untereinander auch nicht aufschmelzbar wie Aluminium oder Kunststoffe, was ihre Aufarbeitung aufwändiger macht. Deswegen werden sie häufig pauschal als nicht recycling-fähig eingestuft.

Die US 2009/0289396 A1 offenbart die Verarbeitung von Gummibestandteilen, einschließlich von EPDM, aus Reifen und Matten als Füllstoff und/oder Verstärkungsmaterial, welches in einem Matrixmaterial dispergiert ist. Die US 2017/0218137 A1 offenbart eine vergleichbare Verarbeitung eines Gummimaterials aus Reifen und dergleichen.

Die US 2018/0186974 A1 offenbart eine Wiederverwendung von bereits verwendetem vernetztem bzw. vulkanisiertem Alt-Gummi zusammen mit einem Neumaterial. Dabei kann u.a. das Verfahren der Mikroverkapselung eingesetzt werden. Zur Formgebung kann das Materialgemisch extrudiert werden.

Nicht offenbart in den vorgenannten Dokumenten ist die Formgebung einer Dichtung für den Anwendungsbereich der Fenster- Tür- oder Fassadenkonstruktion. Vielmehr gehen sämtliche vorgenannte Dokumente von einer Einbindung in einem Blend aus. Die Coextrusion und damit gezielte Oberflächenvariation z.B. durch verschiedene Oberflächenrauhigkeiten aufgrund örtlich-verschiedene Verteilung von Rezyklat und Neumaterial ist aus diesen Dokumenten nicht bekannt.

Trotz dieser vorgenannten Problemstellung ist es die Aufgabe der Erfindung das vorgenannte technische Vorurteil einerseits zu überwinden und zugleich einen verfahrenstechnisch unkomplizierten Weg zur Nutzung der Dichtungen als Rohstoff-Ausgangsmaterial bereitzustellen.

Die Erfindung löst diese Aufgabe durch ein Verfahren mit den Merkmalen des Anspruchs 1 und durch eine Fenster-, Tür- oder Fassadenkonstruktion mit den Merkmalen des Anspruchs 11.

Ein erfindungsgemäßes Verfahren dient dem Recyclierung von EPDM-Dichtprofilen von Fenstern, Türen und/oder Fassadenkonstruktionen. Anders als Hohlkammerprofile, wahlweise aus Kunststoff oder aus Metall, insbesondere aus Aluminium, stellen EPDM-Dichtprofile in ihrer Aufarbeitung einen erhöhten Aufwand dar und sind bislang nicht wirtschaftlich realisierbar. Das vorliegende Verfahren bietet hierfür eine Lösung an und umfasst dabei zumindest die folgenden Schritte

### a. Bereitstellen von gebrauchten EPDM-Dichtprofilen

Bei gebrauchten EPDM-Dichtungen kann es um Dichtungen verschiedenen Alters handeln. So können beispielsweise als gebrauchte EPDM-Dichtungen auch Zuschnittsreststücke von einer ansonsten neuwertigen Rollenware verstanden werden, also der sogenannte "pre-consumer waste". Der Gebrauch liegt bei diesen Dichtungsprofilen in deren Zuschnitt.

Der Großteil der Dichtungsprofile besteht allerdings aus sogenanntem "postconsumer waste". Also Dichtungsprofilen, welche über längere Zeit der Umwelt, insbesondere der Witterung wie Sonneneinstrahlung, Kälte und/oder Regen ausgesetzt waren.

### b. Zerkleinern, insbesondere Zermahlen, der Dichtprofile

In einem zweiten Schritt kann ein Zerkleinern der gebrauchten Dichtprofile erfolgen. Dies kann insbesondere durch Mahlen erfolgen. Je kleiner die durchschnittliche Partikelgröße der EPDM-Partikel ist, desto größer ist die reaktive Oberfläche. Allerdings sollte auch kein Feinstaub im Rahmen der Zerkleinerung hergestellt werden.

### c. Benetzen des zerkleinerten Materials mit einem Benetzungsmittel unter Bereitstellen einer Rezyklatvormischung und Zuführung von Neumaterial zu dem zerkleinerten Material und

In einem dritten Schritt erfolgt ein Benetzen des zerkleinerten Materials mit einem Benetzungsmittel und ein Zuführen von Neumaterial zu dem zerkleinerten Material. Die beiden Verfahrensmerkmale können als Schritte zeitlich nacheinander erfolgen. Zusätzlich zu dem Benetzungsmittel können auch weitere Vernetzungsagentien, Vernetzungsbeschleuniger und weitere Hilfsstoffe zugegeben werden. Das Benetzungsmittel und die Vernetzungsagentien und Hilfsstoffe sind dabei artgleich wie die Ausgangsstoffe und ermöglichen somit auch das nochmalige Recycling.

### d. Formgebung des zerkleinerten Materials, insbesondere zu einem Element einer Fenster-, Tür- und/oder Fassadenkonstruktion.

Schließlich erfolgt die Formgebung des nach Schritt c bereitgestellten zerkleinerten und benetzten Material zu einem Element eines Fensters, einer Tür oder einer Fassadenkonstruktion.

Das Element kann je nach Art der verwendeten EPDM-Dichtprofile spezielle Eigenschaften, insbesondere Oberflächeneigenschaften aufweisen, welche nachfolgend erörtert werden und welche nach der Dauer des Gebrauchs variieren können. Es ist somit nicht gesagt, dass sämtliche nach dem erfindungsgemäßen Verfahren hergestellte Dichtungsprofile, umfassend rezykliertes EPDM-Dichtprofilmaterial, die nachfolgend beschriebenen Eigenschaften aufweisen.

Üblicherweise gilt EPDM-Material als witterungsstabil, allerdings hat die Witterung einen Einfluss auf die Ausbildung des EPDM. Typischerweise wird EPDM peroxidisch oder durch Schwefelbrücken bis zu einem bestimmten Vernetzungsgrad vernetzt. Durch Witterung, sei es z.B. durch Wärme, Feuchtigkeit oder Strahlung kann eine Nachvernetzung erfolgen. Bekannterweise bildet ein größerer Vernetzungsgrad eine höhere Härte aus als bei einem Neumaterial. Entsprechend variiert auch die Oberflächenrauhigkeit bei einem Verbundmaterial aus Neumaterial und dem recyclierten zerkleinerten Material der EPDM Dichtprofile, vergleichbar mit Sandpapier. Ein solches EPDM-Verbundmaterial aus EPDM mit verschiedenen Härtegraden war bislang nicht bekannt. Sie können z.B. ein Verschieben des Dichtprofils in einer Nut eines Hohlkammerprofils vorteilhaft verhindern oder zumindest verringern.

Verfahrenstechnisch ist das erfindungsgemäße Verfahren ebenfalls von Vorteil, da es nicht nur die Schaffung des vorbeschriebenen neuartigen Materials ermöglicht, sondern überdies auch eine kosteneffiziente Möglichkeit der Verwertung größerer Mengen an EPDM-Material mit unterschiedlichen Härten zu einem neuen Produkt bietet.

Vorteilhafte Ausgestaltungen der Erfindung sind Gegenstand der Unteransprüche.

Eine optimale Größe für die Weiterverarbeitung ergibt sich, wenn das Zermahlen unter Bereitstellung eines EPDM-Pulvers, vorzugsweise mit einer mittleren Partikelgröße zwischen 0,1-0,8 mm, erfolgt. Die mittlere Partikelgröße umfasst eine gewisse Schwankungsbreite der einzelnen Partikel. Die mittlere Partikelgröße kann mit einem handelsüblichen Partikelgrößenmessgerät, z.B. basierend auf Laserbeugung, bestimmt werden.

Das Benetzungsmittel kann vorteilhaft in einem Mengenverhältnis von 1-10 Gew.% zu dem zermahlenen EPDM-Pulver zugegeben werden. Zugabe von Benetzungsmittel bei diesem Mengenbereich ermöglicht eine optimal vorbereitete Oberfläche für eine besonders innige Verbindung mit dem später zudosierten Neumaterial.

Zusätzlich zum Benetzen des zerkleinerten Materials kann eine Zugabe eines Vernetzungsmittels, vorzugsweise von Schwefel und/oder Peroxid, zu dem zerkleinerten Material der Rezyklatvormischung erfolgen. Das Vernetzungsmittel kann auch im Rahmen des Neumaterials zugeführt werden. Allerdings ist die auch Ausbildung von Bindungen zwischen dem recyclierten EPDM-Material und dem Neumaterial erwünscht, so dass auch die Rezyklatmischung bereits Vernetzungsmittel, z.B. ein Peroxid und/oder Schwefel, enthalten kann.

Weiterhin kann zusätzlich zum Vernetzungsmittel ein Zinkoxid zu dem zerkleinerten Material der Rezyklatvormischung zugegeben werden, um den Vernetzungsprozess zusätzlich zu kontrollieren.

Es ist von Vorteil wenn auch ein Beschleuniger zu dem zerkleinerten Material der Rezyklatvormischung zugegeben wird. Dieser kann ebenfalls im Neumaterial enthalten sein, allerdings ist es reaktionskinetisch bessern, wenn der Beschleuniger bereits in der Rezyklatvormischung, also der Mischung als zerkleinerten EPDM-Dichtungen, Benetzungsmittel und ggf. weiteren Hilfsstoffen und Agenzien enthalten ist.

Vorteilhaft kann die Mischung an Neumaterial und der Rezyklatvormischung in einem Umfang erfolgen, dass der Anteil an zerkleinertem gebrauchtem EPDM-Material, bezogen auf die Gesamtmenge, zumindest 10 Gew.%, vorzugsweise zumindest 20 Gew.%, besonders bevorzugt zumindest 50 Gew.%, beträgt. Somit kann eine signifikant große Menge an gebrauchtem EPDM im Verfahren verwertet werden

Die Formgebung kann in einem etablierten Prozess im Rahmen einer Coextrusion, erfolgen. Somit ist das erfindungsgemäße Verfahren mit bereits etablierten Fertigungsmaschinen realisierbar und auf entsprechenden Prozessanlagen implementierbar.

Abgesehen von der Formgebung können sämtliche Schritte des Verfahrens energie- und materialschonend bei einer Temperatur unterhalb von 50°C, vorzugsweise unterhalb von 40°C, durchgeführt werden. Dadurch kann eine bessere kinetische Reaktionskontrolle ermöglicht werden.

Das Bereitstellen von gebrauchten EPDM-Dichtungen umfasst eine Bereitstellung eines Gemisches von Dichtungen aus zueinander unterschiedlichem EPDM-Material, welche zu einem Element weiterverarbeitet werden. Es können somit EPDM-Dichtungen unterschiedlichen Alters, unterschiedlicher Beschaffenheit und unterschiedlicher chemischer Zusammensetzung gemeinsam durch das erfindungsgemäße Verfahren verarbeitet werden.

Weiterhin erfindungsgemäß ist eine Fenster-, Tür- oder Fassadenkonstruktion umfassend ein Element als Verbundmaterial gebildet aus zumindest recycliertem EPDM-Material und einem Neumaterial, wobei das recyclierte EPDM-Material innerhalb des Verbundmaterials einen höheren Vernetzungsgrad aufweist als das Neumaterial. Wie zuvor erläutert, muss nicht jedes recyclierte EPDM im Rahmen des erfindungsgemäßen Verfahrens zu dem vorgenannten Ergebnis für ein Verbundmaterial führen. Allerdings erhöht sich der Grad der Vernetzung des EPDM über eine gewisse Zeit der Witterung hinweg. Dies ermöglicht eine Modifikation der Oberflächeneigenschaften, insbesondere der Oberflächenrauhigkeit, wodurch eine bessere Auflage auf einem Hohlprofil erfolgen kann.

Das Verbundmaterial kann vorteilhaft ein Matrixmaterial mit dem Neumaterial aufweisen. In dem Neumaterial als Matrixmaterial ist ein darin verteiltes recycliertes EPDM-Material angeordnet, wobei das recyclierte EPDM-Material eine größere Shore-Härte aufweist als das Matrixmaterial.

Das Element kann als ein Formteil, vorzugsweise extrudiertes Formteil, ausgebildet sein, welches abschnittsweise ausschließlich aus Neumaterial gebildet ist, wobei der Abschnitt, welcher recycliertes ECPM-Material umfasst, eine höhere Oberflächenrauhigkeit aufweist als der Abschnitt, welcher ausschließlich aus Neumaterial besteht.

Darüber hinaus kann das Element als ein Dichtungsprofil ausgebildet sein, umfassend eine erste Stirnfläche, z.B. eine Anschlagsfläche oder eine Dichtlippe, und einen Dichtfuß zum Einsatz in einer Nut, wobei der Dichtfuß eine Oberfläche mit einer größeren Oberflächenrauhigkeit durch ein in einem Matrixmaterial verteiltes recycliertes EPDM-Material aufweist als die Stirnfläche.

Weitere Vorteile, Merkmale und Einzelheiten der Erfindung ergeben sich aus der nachfolgenden Beschreibung, in der ein Ausführungsbeispiel der Erfindung anhand der beiliegenden Zeichnungen näher erläutert wird. Der Fachmann wird die in den Zeichnungen, der Beschreibung und den Ansprüchen in Kombination offenbarten Merkmale zweckmäßigerweise auch einzeln betrachten und zu sinnvollen weiteren Kombinationen zusammenfassen. Es zeigen:

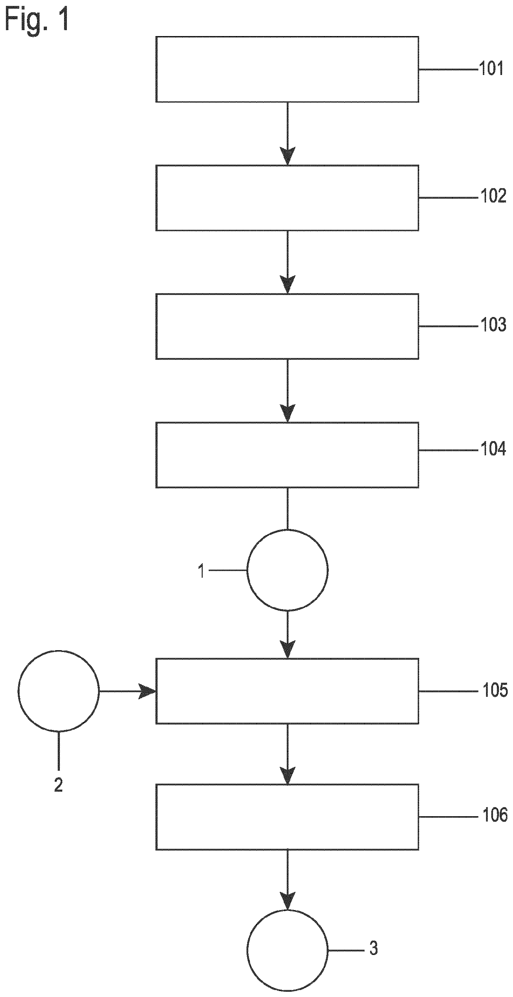

- Fig. 1: eine Fließdiagramm einer Ausführungsvariante eines erfindungsgemäßen Verfahrens.

Das in Fig. 1 dargestellte Verfahren weist in einem ersten Schritt das Bereitstellen 101 von Dichtungsprofilen einer Fenster-, Tür- oder Fassadenprofilkonstruktion auf. Das Bereitstellen kann ein Lösen des Dichtungsprofils von einem Rahmenprofil, beispielsweise einem Kunststoff- oder Metallrahmenprofil und insbesondere einem Hohlkammerprofil auf. Dies kann z.B. durch Ausfädeln eines Gummikeders aus einer Dichtungsnut oder meistens durch Entfernen unter Zerstören des Profils, z.B. Durchschreddern, erfolgen. An diesen zerstörenden Zerkleinerungsschritt durch Schreddern schließt sich die Separierung die Separierung des geschredderten EPDM aus dem Gemisch der Schredderleichtfraktion an.

Umgangs- und fachüblich werden Dichtungsprofile in dem Anwendungsbereich auch als Dichtungsgummi bezeichnet. Damit werden im Anwendungsbereich sowohl elastomere Stoffe als auch EPDM-Materialien bezeichnet. Besonders bevorzugt werden Dichtungsprofile umfassend EPDM verarbeitet.

In einem zweiten Schritt 102 erfolgt ein Zerkleinern der Dichtungsprofiles, vorzugsweise durch Zermahlen, zu einem Pulver. Die mittlere Partikelgröße des Pulvers, nachfolgend auch Gummimehl genannt, kann zwischen 01,-0,8 mm betragen.

Lediglich optional können die Dichtungsprofile vor ihrer Zerkleinerung gesäubert werden. Dies kann u.a. eine chemische oder eine rein physikalische Reinigung erfolgen.

In einem dritten Schritt 103 erfolgt die Zugabe eines Benetzungsmittels. Da Benetzungsmittel kann im bevorzugten Umfang von 1 bis 10 Gew.%, bezogen auf das Pulver, zugegeben werden. Das Benetzungsmittel dient der besseren Oberflächenanhaftung und/oder der Verbesserung der Reaktivität des Pulvers.

Das derart vorbehandelte und benetzte gemahlene Dichtungspulver wird im Anschluss in einem weiteren Schritt 104 zu einer Rezyklatvormischung weiterverarbeitet werden. Hierfür wird das Dichtungspulver mit einer mit im Anwendungsbereich der Elastomer- und/oder EPDM-Dichtungen typischerweise eingesetzten Vernetzungschemikalien vermengt. Als Vernetzungschemikalien bietet sich eine oder mehrere zinkoxidische Verbindungen an, welche im Rahmen der vorliegenden Erfindung als ZnO bezeichnet werden. Dabei kann es sich allerdings auch um Mischoxide oder um Zink einer anderen Oxidationsstufe handeln, wobei der Einsatz von Zink(II)oxid besonders bevorzugt ist. Bevorzugt wird die zinkoxidische Verbindung im Umfang von 1-3 Gew.%, bezogen auf die Menge an Pulver, zugegeben werden.

Neben dem Vernetzungsmittel kann in Schritt 104 zur Ausbildung einer Rezyklatvormischung auch die Zugabe von Schwefel und/oder einem Beschleuniger erfolgen. Die bevorzugte Konzentration an Schwefel kann zwischen 0,25 und 1,5 Gew.%, bezogen auf die Menge an Pulver betragen.

Zusätzlich oder alternativ zum Schwefel kann auch die Zugabe eines Polymerisations- und/oder Vernetzungsbeschleunigers in das Pulver erfolgen. Die bevorzugte Konzentration an Beschleuniger kann zwischen 0,5 bis 1,5 Gew.%, bezogen auf das Gewicht des eingesetzten Pulvers, betragen. Bevorzugt kann ein Sulfenamid, vorzugsweise ein N-Cyclohexylbenzothiazol-2-sulfenamid, kurz CBS, als Beschleuniger zu dem Recyclingmehl zugegeben werden.

Optional kann ein Aktivator, vorzugsweise zu weniger als 2 Gew.% bezogen auf die Gesamtmenge des Rezyklatgemisches, vorgesehen sein. Als Aktivator kann z.B. ein EPDM-Terpolymer, wie u.a. das Handelsprodukt Trilene 67 eingesetzt werden. Alternativ oder zusätzlich kann ein Kautschuk, insbesondere Polyocetenamer oder Vestamer 8012, als Beschleuniger eingesetzt werden.

Weitere optionale Bestandteile der Rezyklatvormischung sind Devulkanisierungsmittel, Vernetzungssysteme und/oder Additive. Als Devulkanisierungsmittel kann Struktol A89 und/oder Struktor H107 und/oder Struktol H107 eingesetzt werden. Als Vernetzungssystem kann ein Gemisch aus einem Flüssigpolymer und Vestamer 8012 eingesetzt werden. Weiterhin kann als Additiv Deoflow F und/oder DeoVulc TP4-75V. Die weiteren optionalen Bestandteile können vorzugsweise zu weniger als 2 Gew.% bezogen auf die Gesamtmenge des Rezyklatvormischung, vorgesehen sein.

Die Rezyklatvormischung liegt am Ende des Schrittes 104 bevorzugt als Granulat oder als Streifenmaterial vor. Es kann einen mittlere Partikeldurchmesser in der granulierten Variante, oder einen mittleren Querschnitt zur Längsachse in der Streifenmaterial-Variante, zwischen 1 mm und 5 mm, vorzugsweise zwischen 2-4mm aufweisen.

Schließlich wird die Rezyklatvormischung in einem Schritt 105 mit einem Gemisch versetzt, welches üblicherweise als Ausgangsmaterial für ein EPDM-Material genutzt wird. Dieses Gemisch wird nachfolgend auch als Neumaterialmischung bezeichnet. Sie kann EPDM, Ruß, einen Beschleuniger und ein Vernetzungsmittel umfassen, sowie optional einen Weichmacher und ggf. einen oder mehrere Hilfsstoffe. Alternativ oder zusätzlich zu Ruß können auch andere Feststoffe, wie Kreide, in der Neumaterialmischung vorgesehen sein. Dabei wird die Rezyklatvormischung mit der Neumaterialmischung in einem Verhältnis zwischen 1:4 und 4:1 vermischt. Besonders bevorzugt liegt der Rezyklatanteil in der Mischung mit dem Neumaterialgemisch zwischen 20-60 Gew.%. Die Schritte 105 und 106 können auch zeitgleich erfolgen, z.B. bei einem schichtweisen Auftrag unter Ausbildung des Formkörpers. Dabei kann man auf eine Schicht der geschmolzenen Rezyklatvormischung mit einer Schicht Neumaterialmischung versehen. In diesem Fall sind die miteinander verschmolzenen Schichten eine inhomogene Mischung.

Zur Ausbildung neuer EPDM-basierter Formkörper wird die gesagte Mischung in einem weiteren Schritt 106 in Formgebungsverfahren zu einem Formkörper verarbeitet. Als Formgebungsverfahren kann bevorzugt ein Extrusionsverfahren, z.B. ein Coextrusionsverfahren, genutzt werden, so dass neue Dichtungsprofile herstellbar sind.

Besonders bevorzugt ist eine Verarbeitung der Mischung umfassend das recyclierte EPDM zu Dichtungsprofilen mittels Coextrusion möglich, wobei eine Schicht Recyclingvormischung durch eine oder mehrere Schichten von Neuware abgedeckt, um dadurch eine sehr glatte Oberfläche des Formkörpers bereitzustellen.

Auch ist eine Herstellung von Coexdichtungsprofilen ist in Schritt 106 möglich, wobei deren Dichtungsfuß zum Fügen in eine Nutaufnahme eines Hohlkammerprofils aus der vergleichsweise oberflächenrauhen Rezyklatmischung derart hergestellt ist, dass sie durch die raue Oberfläche mit reduzierter Kraft in die Nut zu fügen ist.

Während die vorhergehenden Schritte, insbesondere die Schritte 103 und/oder 104 und/oder 105 bei üblicher Raumtemperatur zwischen 10-35°C erfolgen können, wird das Formgebungsverfahren bei Temperaturen zwischen 70°C bis 250°C durchgeführt.

Die Erfindung zeichnet sich dadurch aus, dass bis zu einer auch bei Neumaterial üblichen Formgebung keine weitere thermisch-chemische Umwandlung des Materials der gebrauchten Dichtungsprofile erfolgt, sondern lediglich eine vergleichsweise energieeffiziente Zerkleinerung durch Einmahlung der Dichtungsprofile.

Überdies ist bei Verwendung mehrerer Dichtungsprofile keine aufwändige Trennung von unterschiedlichen EPDM-Sorten notwendig. Dies würde überdies eine Identifizierung von EPDM-Sorten und damit eine Analytik notwendig machen. Diese Aspekte sind nunmehr überflüssig.

Es können überdies verschiedene EPDM-Sorten einzeln oder insbesondere auch als Mischung dem Prozess zugeführt werden, wobei sich die EPDM-Sorten durch ihre verschiedenen Härtegrade, Porositäten, wie z.B. Kompaktgummi oder Moosgummi, verschiedene Farben, der Art der Herstellung z.B. als extrudierte Profile, sowie deren chemische Zusammensetzung insbesondere ob es sich um peroxidisch-vernetzte und/oder mit schwefel-vernetzte EPDM-Sorten handelt, unterscheiden.

Im Rahmen der erfindungsgemäßen Verarbeitung können hohe Rezyklatanteile im von mehr als 10 Gew.%, vorzugsweise mehr als 20 Gew.%, besonders bevorzugt mehr 50 Gew.%, in den neu hergestellten Formteilen vorhanden sein.

Die an sich gegebenen Vorteile von EPDM, insbesondere dessen Verarbeitbarkeit durch Extrusion kann auch auf das EPDM-Material mit den recyclierten Anteilen angewandt werden.

Die gebrauchten EPDM-Dichtungen können im Rahmen des vorliegenden Verfahrens zu Dichtungsprofilen, Eckverbindungsprofilen, Dichtungsbauteile, Dichtungsformteilen, Dichtungsrahmen, Rahmenprofilen, für Rahmen oder Teilen von Fenstern, Türen und/oder Fassadensystemen verarbeitet werden. Dabei können für Formteile wie zum Beispiel Dichtungsecken oder Dichtungsrahmen als auch für extrudierte Dichtungsprofile im Rahmen des erfindungsgemäßen Verfahrens realisiert werden.

### Bezugszeichen

- 1: Rezyklatvormischung
- 2: Neumaterial
- 3: Element

- 101: Bereitstellen von Dichtungsprofilen einer Fenster-, Tür- oder Fassadenprofilkonstruktion
- 102: Zerkleinern der Dichtungsprofiles zu einem Pulver
- 103: Zugabe eines Benetzungsmittels
- 104: Weiterverarbeitung
- 105: Zuführung einer Neumaterialmischung
- 106: Formgebungsverfahren

## Patentansprüche

1. Verfahren zur Recyclierung von EPDM-Dichtprofilen von Fenstern, Türen und/oder Fassadenkonstruktionen, **gekennzeichnet durch die folgenden Schritte:**
a. Bereitstellen (101) von gebrauchten EPDM-Dichtprofilen
b. Zerkleinern (102), insbesondere Zermahlen, der Dichtprofile
c. Benetzen (103) des zerkleinerten Materials mit einem Benetzungsmittel unter Bereitstellen einer Rezyklatvormischung (1) und Zuführung (105) von Neumaterial (2) zu dem zerkleinerten Material und
d. Formgebung (106) des zerkleinerten Materials, insbesondere zu einem Element (3) einer Fenster-, Tür- und/oder Fassadenkonstruktion, wobei die Formgebung (106) im Rahmen einer Coextrusion erfolgt.

2. Verfahren nach Anspruch 1, **dadurch gekennzeichnet, dass** das Zermahlen unter Bereitstellung eines EPDM-Pulvers, vorzugsweise mit einer mittleren Partikelgröße zwischen 0,1-0,8 mm, erfolgt.

3. Verfahren nach Anspruch 1 oder 2, **dadurch gekennzeichnet, dass** das Benetzungsmittel in einem Mengenverhältnis von 1-10 Gew.% zu dem zermahlenen EPDM-Pulver zugegeben wird.

4. Verfahren nach einem der vorhergehenden Ansprüche, **dadurch gekennzeichnet, dass** eine Schicht Recyclatvormischung durch eine oder mehrere Schichten von Neuware abgedeckt werden, so dass eine glatte Oberfläche des Formkörpers bereitgestellt wird.

5. Verfahren nach einem der vorhergehenden Ansprüche, **dadurch gekennzeichnet, dass** eine Herstellung von Coextrusions-Dichtungsprofilen derart erfolgt, dass ein Dichtungsfuß des Coextrusionsprofils zum Fügen in eine Nutaufnahme eines Hohlkammerprofils aus der vergleichsweise oberflächenrauhen Rezyklatmischung hergestellt ist, dass sie durch die raue Oberfläche mit reduzierter Kraft in die Nut eingefügt ist.

6. Verfahren nach Anspruch 4 oder 5, **dadurch gekennzeichnet, dass** ein Beschleuniger zu dem zerkleinerten Material der Rezyklatvormischung (1) zugegeben wird.

7. Verfahren nach einem der vorhergehenden Ansprüche, **dadurch gekennzeichnet, dass** das die Mischung an Neumaterial (2) und der Rezyklatvormischung (1) in einem Umfang erfolgt, dass der Anteil an zerkleinertem gebrauchtem EPDM-Material, bezogen auf die Gesamtmenge, zumindest 10 Gew.%, vorzugsweise zumindest 20 Gew.%, besonders bevorzugt zumindest 50 Gew.%, beträgt.

8. Verfahren nach einem der vorhergehenden Ansprüche, **dadurch gekennzeichnet, dass,** abgesehen von der Formgebung (106), sämtliche Schritte des Verfahrens bei einer Temperatur unterhalb von 50°C, vorzugsweise unterhalb von 40°C, durchgeführt werden.

9. Verfahren nach einem der vorhergehenden Ansprüche, **dadurch gekennzeichnet, dass** das Bereitstellen (101) von gebrauchten EPDM-Dichtungen, eine Bereitstellung eines Gemisches von Dichtungen aus zueinander unterschiedlichem EPDM-Material umfasst, welche zu einem Element (3) weiterverarbeitet werden.

10. Fenster-, Tür- oder Fassadenkonstruktion, insbesondere hergestellt nach einem Verfahren nach einem der vorhergehenden Ansprüche, umfassend ein Element als Verbundmaterial gebildet aus zumindest recycliertem EPDM-Material und einem Neumaterial (2), wobei das recyclierte EPDM-Material innerhalb des Verbundmaterials einen höheren Vernetzungsgrad aufweist als das Neumaterial (2) und wobei das Element (3) als ein Formteil, vorzugsweise coextrudiertes Formteil, ausgebildet ist, welches abschnittsweise ausschließlich aus Neumaterial (2) gebildet ist, wobei der Abschnitt, welcher recycliertes ECPM-Material umfasst, eine höhere Oberflächenrauhigkeit aufweist als der Abschnitt, welcher ausschließlich aus Neumaterial (2) besteht.

11. Fenster-, Tür- oder Fassadenkonstruktion nach Anspruch 10, **dadurch gekennzeichnet, dass** das Verbundmaterial ein Matrixmaterial umfassend das Neumaterial (2) aufweist und ein darin verteiltes recycliertes EPDM-Material aufweist, welches eine größere Shore-Härte aufweist als das Matrixmaterial.

12. Fenster-, Tür- oder Fassadenkonstruktion nach einem der vorhergehenden Ansprüche, **dadurch gekennzeichnet, dass** Element (3) als ein Dichtungsprofil ausgebildet ist, umfassend eine erste Stirnfläche und einen Dichtfuß zum Einsatz in einer Nut, wobei der Dichtfuß eine Oberfläche mit einer größeren Oberflächenrauhigkeit durch ein in einem Matrixmaterial verteiltes recycliertes EPDM-Material aufweist als die Stirnfläche.
